(19) Europäisches Patentamt
European Patent Office
Office européen des brevets

(11) **EP 3 239 394 B1**

(12) **EUROPEAN PATENT SPECIFICATION**

(45) Date of publication and mention
of the grant of the patent:
**29.01.2020 Bulletin 2020/05**

(51) Int Cl.:
*D06M 17/00* (2006.01)   *A62B 17/00* (2006.01)
*B32B 5/26* (2006.01)   *D04H 3/14* (2012.01)
*D06M 17/04* (2006.01)   *B32B 7/12* (2006.01)
*D06M 17/06* (2006.01)   *B32B 5/02* (2006.01)
*A41D 31/00* (2019.01)

(21) Application number: **15873060.6**

(22) Date of filing: **22.12.2015**

(86) International application number:
**PCT/JP2015/085809**

(87) International publication number:
**WO 2016/104492 (30.06.2016 Gazette 2016/26)**

(54) **PROTECTIVE CLOTHING**

PERSONENSCHUTZANZUG

VÊTEMENT DE PROTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 JP 2014264350**

(43) Date of publication of application:
**01.11.2017 Bulletin 2017/44**

(73) Proprietor: **Toray Industries, Inc.**
**Tokyo 103-8666 (JP)**

(72) Inventors:
• **NAKAMURA, Taketoshi**
**Otsu-shi**
**Shiga 520-2141 (JP)**
• **KAJIYAMA, Hiroshi**
**Otsu-shi**
**Shiga 520-2141 (JP)**
• **HAYASHI, Yuichiro**
**Otsu-shi**
**Shiga 520-2141 (JP)**
• **TAKEDA, Masanobu**
**Otsu-shi**
**Shiga 520-2141 (JP)**

(74) Representative: **Mewburn Ellis LLP**
**City Tower**
**40 Basinghall Street**
**London EC2V 5DE (GB)**

(56) References cited:
WO-A1-2008/066022     JP-A- H01 147 822
JP-A- H01 183 505     JP-A- H02 234 965
JP-A- H03 220 356     JP-A- 2001 226 860
JP-A- 2007 098 356     JP-A- 2009 106 468
JP-A- 2013 154 289     JP-A- 2014 009 954
JP-A- 2014 101 617     JP-A- 2014 101 617

**Description**

The present invention relates to a dust-proof material which protects a human body from powder dust emitted into an environment, and a protective clothing using the same.

BACKGROUND ART

In work for removing or handling powder dust, workers often work while wearing a chemical protective clothing, rubber gloves, rubber boots, and a dust-proof mask having a collection efficiency of 95% or more on their clothing. Of these, the chemical protective clothing is basically disposable because a worker may use three or four sets of chemical protective clothing a day. As the material thereof, polyethylene, polypropylene, or the like may be used. Recently, the chemical protective clothing is more often worn in environments of powder dust containing radioactive materials. In order to protect a human body from powder dust, workers wear protectors such as boots or rubber gloves, fix space between the protectors and the chemical protective clothing with an adhesive tape to prevent outside air from flowing into their clothing through the space therebetween. Therefore, outside air does not flow into the protective clothing, thereby increasing humidity or temperature in the clothing. Work in summer tends to lower working efficiency because some preventive measures against heat stress are taken such as increasing the frequency of rests or reducing the working time.
It is therefore required for chemical protective clothing to have high dust proof property which prevents powder dust from entering into clothing, and air permeability and moisture permeability for comfortable work.
Patent Documents 1 and 2 disclose an electret nonwoven fabric sheet and a production method thereof. The nonwoven fabric disclosed in Patent Documents 1 and 2 has high collection efficiency for powder dust and high air permeability. It is, however, difficult to use the electret nonwoven fabric alone as a protective clothing in terms of strength or abrasion resistance. Further, as for the laminated structure, there is no solution disclosed in the documents for the laminating method. Patent Document 3 discloses a dust-proof clothing using a dust-proof material having a fiber layer and an electret nonwoven fabric layer, which are adhered in an adhesion area ratio as measured by a particular method described therein. Patent Document 4 provides a composite sheet for use as an air filter material by integrating a fabric layer and a fiber layer. Patent Document 5 discloses an air filter material having a laminated electret nonwoven fabric and proanthocyanidin layer. Patent Document 6 similarly discloses an air filter material comprising an electret nonwoven fabric and supporting layer.

PRIOR ART DOCUMENTS

Patent Document 1: JP 2003-73971 A
Patent Document 2: JP 2008-179932 A
Patent Document 3: JP 2014-101617 A
Patent Document 4: JP 2007-098356 A
Patent Document 5: WO 2008/066022 A1
Patent Document 6: JP 2013-154289 A

PROBLEMS TO BE SOLVED BY THE INVENTION

The present invention addresses the problem of providing a protective clothing having high dust proof property which prevents powder dust from entering into clothing, having air permeability and moisture permeability for comfortable work, and using a dust-proof material suitable for thread sewing.

SOLUTIONS TO THE PROBLEMS

To solve the problems, the present invention discloses the following dust-proof clothing.

(1) A protective clothing using a dust-proof material having characteristics i) and ii) as defined in claim 1:

i) The dust-proof material has a fiber layer and an electret nonwoven fabric layer, and a total number of the fiber layer and the electret nonwoven fabric layer is 2 or more.
ii) In the dust-proof material, the fiber layer and the electret nonwoven fabric layer, which are adjacent to each other, are adhered at an adhesion area ratio of 5% or more and 10% or less.

As a preferred embodiment, the following dust-proof clothing is provided.

(2) The protective clothing in which the electret nonwoven fabric layer of the dust-proof material is a meltblown nonwoven fabric or a spunbonded nonwoven fabric.

(3) Any of the protective clothing, in which the dust-proof material has an air permeability of 30 $cm^3/cm^2/s$ or more.

(4) Any of the protective clothing, in which the electret nonwoven fabric layer is made of a meltblown nonwoven fabric that contains the following amount of additives,

iii) containing 0.5 to 5% by mass of a hindered amine additive or 0.5 to 5% by mass of a triazine additive, or

iv) containing a total of 0.5 to 5% by mass of a hindered amine additive and a triazine additive, both being essential.

(5) Any of the protective clothing, in which an adhesive to adhere the fiber layer and the electret nonwoven fabric layer of the dust-proof material is a hot-melt adhesive.

(6) Any of the protective clothing, in which the amount of the hot-melt adhesive to adhere the fiber layer and the electret nonwoven fabric layer is 0.5 $g/m^2$ or more and 3.0 $g/m^2$ or less.

(7) Any of the protective clothing having a thread sewing portion.

EFFECTS OF THE INVENTION

According to the present invention, a protective clothing that is excellent in dust proof property and air permeability, cooler during work in summer, and uses a dust-proof material suitable for thread sewing is obtained.

BRIEF DESCRIPTION OF DRAWINGS

Fig. 1 is a conceptual view showing measurement of charge density of an electret nonwoven fabric layer.

Fig. 2a is a cross-sectional view showing a fiber layer after the electret nonwoven fabric is separated from a protective material.

Fig. 2b is a cross-sectional view showing a fiber layer in which all the fibers derived from the electret nonwoven fabric adhering on the fiber layer are removed from the fiber layer of Fig. 2a.

Fig. 2c is a cross-sectional view showing a fiber layer in which the fibers derived from the electret nonwoven fabric adhering on the fiber layer are partially removed from the fiber layer of Fig. 2a.

Fig. 3 is a view showing portions to be cut out as samples from the dust-proof material in order to calculate an adhesion area of the dust-proof material.

EMBODIMENTS OF THE INVENTION

<Electret Nonwoven Fabric Layer>

An electret nonwoven fabric layer used in a dust-proof material of the present invention is a sheet made of a nonconductive fiber material, and can be obtained by a melt-blowing process or a spun-bonding process. That is, the electret nonwoven fabric layer is preferably a meltblown nonwoven fabric or a spunbonded nonwoven fabric.

The meltblown nonwoven fabric is produced by a melt-blowing process. The melt-blowing process is generally a process in which hot air blows a thermoplastic polymer extruded from a spinneret to form fine fibers and the self-bonding characteristics of the fine fibers is used to form a web. As compared with other production processes of nonwoven fabrics such as spunbonded nonwoven fabric by spun-bonding, the melt-blowing process requires no complicated operations and is capable of easily producing fine fibers of several micrometers to several tens micrometers in diameter. The spinning conditions in the melt-blowing process include polymer extrusion rate, nozzle temperature, air pressure, etc. Optimization of these spinning conditions allows the production of a nonwoven fabric having a desired fiber diameter.

The spun-bonding process is as follows . A resin is melted and is then spun into fibers from a spinneret. The fiber threads that have been cooled to be solidified are subjected to pressure air blown from an ejector, thereby being pulled and elongated. Such elongated fiber threads are collected on a movable net to form a fiber web. The fiber web is thermally adhered to form a nonwoven fabric. Since the spun-bonding process includes a step of melting a resin and pulling the melted resin, a fiber having higher strength than that obtained by the melt-blowing process tends to be produced.

Synthetic fiber or natural fiber is exemplified as raw materials of the nonwoven fabric, and synthetic fiber is preferable.

The main raw material of the nonwoven fabric to be used requires electret function, and preferably has a volume resistivity of $10^{12}\Omega$•cm or more, and more preferably $10^{14}\Omega$•cm. Examples thereof include polyolefins such as polyethylene and polypropylene, polyesters such as polyethylene terephthalate and polylactic acid, polycarbonate, polystyrene, polyphenylene sulfite, fluororesin, and a mixture thereof. Among these, polyolefins and a polylactic acid-based material are preferable in terms of electret performance. Among polyolefins, a polypropylene-based material is more preferable.

When the electret nonwoven fabric layer of the present invention is a meltblown nonwoven fabric, the meltblown nonwoven fabric preferably contains a hindered amine additive and/or a triazine additive. This is because containing of the additive in the nonconductive fiber sheet allows especially high electret performance to be kept.

The content (s) of the hindered amine additive and/or the triazine additive is/are not particularly limited. In cases where the meltblown nonwoven fabric contains the hindered amine additive or the triazine additive alone, the content of each of the additives is preferably in the range of 0.5 to 5% by mass, more preferably 0.7% by mass or more and 3% by mass or less, relative to the mass of the meltblown nonwoven fabric. In cases where the meltblown nonwoven fabric contains both the hindered amine additive and the triazine additive, the total content of the additives is preferably in the range of 0.5 to 5% by mass, more preferably an upper limit of 0.7% by mass or more and an lower limit of 3% by mass or less, relative to the mass of the meltblown nonwoven fabric. When the adding amount is low, it is difficult to achieve intended high-level electret performance. In contrast, an excessively larger amount of the additive deteriorates fiber forming property or film forming property and is disadvantageous in cost.

Of the two additives mentioned above, examples of the hindered amine additive include poly[(6-(1,1,3,3-tetramethylbutyl)imino-1,3,5-triazine-2,4-diyl)((2,2,6,6-tetramethyl-4-piperidyl)imino)hexamethylene ((2,2,6,6-tetramethyl-4-piperidyl)imino)] (manufactured by Ciba-Geigy, "CHIMASSORB" (registered trademark; the same applies hereinafter) 944 LD), a polycondensate of dimethyl succinate with 1-(2-hydroxyethyl)-4-hydroxy-2,2,6,6-tetramethylpiperidine (manufactured by Ciba-Geigy, "TINUVIN" (registered trademark; the same applies hereinafter) 622 LD), and bis(1,2,2,6,6-pentamethyl-4-piperidyl)-2-(3,5-di-t-butyl-4-hydroxybenzyl)-2-n-butylmalonate (manufactured by Ciba-Geigy, "TINUVIN" 144).

Examples of the triazine additive include the above-described poly[(6-(1,1,3,3-tetramethylbutyl)imino-1,3,5-triazine-2,4-diyl)((2,2,6,6-tetramethyl-4-piperidyl)imino) hexamethylene((2,2,6,6-tetramethyl-4-piperidyl)imino)] (manufactured by Ciba-Geigy, "CHIMASSORB" 944 LD) and 2-(4,6-diphenyl-1,3,5-triazin-2-yl)-5-((hexyl)oxy)-phenol (manufactured by Ciba-Geigy, "TINUVIN" 1577 FF). Of these, the hindered amine additive is particularly preferably used.

The electret nonwoven fabric layer has a charge density of $1\times10^{-10}$ coulomb/cm$^2$ or more, further $1\times10^{-9}$ coulomb/cm$^2$ or more, and further preferably $1\times10^{-8}$ coulomb/cm$^2$ or more.

In addition to the above additives, the electret nonwoven fabric may contain known additives commonly used in nonconductive fiber sheets of electret processed products, such as a heat stabilizer, a weathering agent, and a polymerization inhibitor.

When a nonwoven fabric is subjected to electret processing, the following method may be used.

A nonconductive fiber sheet is run. A slit-shaped suction nozzle is brought into contact with the sheet so as to cross the whole surface in the cross direction of the sheet. And, the surface of the sheet on the opposite side of the contact portion is brought into contact with or immersed into a water surface. Water is sucked from the suction nozzle under such conditions.

When water is sucked from the suction nozzle, since the water on the opposite side of the part where the suction nozzle is in contact with the sheet passes through the sheet in the thickness direction of the sheet, the water can be penetrated into an entire of the thickness direction inside the sheet. Moreover, since the suction nozzle is arranged to cross in the cross direction of the sheet and sucking is performed while running the sheet, the above penetrating action of water in an entire of the thickness direction of the sheet is spread uniformly over a whole surface of the sheet. Therefore, by drying the sheet, an electret processed nonwoven fabric, charged uniformly and in the high density, can be obtained.

Alternatively, a method of applying a direct current (DC) corona discharge to the nonwoven fabric sheet may also be used. Example thereof include the following. A plurality of DC corona discharge electrodes are provided, and a field intensity on the DC corona discharge electrode that affects the sheet later is made stronger than that affects first, so that the sheet is electret-processed.

The electret nonwoven fabric layer preferably has an air permeability of 40 cm$^3$/cm$^2$/s or more, more preferably 80 cm$^3$/cm$^2$/s or more, and even more preferably 100 cm$^3$/cm$^2$/s or more, so that when used as a dust-proof material, the layer more easily maintain the air permeability. The air permeability can be achieved by basis weight, average fiber diameter, thickness, or the like.

<Fiber Layer>

Then, a fiber layer used in the dust-proof material will be described.

The fiber layer of the present invention is a layer containing fiber, which is made of non-electret nonwoven fabric according to the definition in the present invention. Such a fiber layer preferably has sufficient strength to the material, abrasion resistance, touch texture, softness, and high air permeability. As the fiber structure of the fabric used as the fiber layer, woven fabric, knitted fabric, nonwoven fabric, paper or the like may be used. Among them, nonwoven fabric is preferred, from the viewpoints of cost and properties. As the nonwoven fabric, wet nonwoven fabric, resin-bonded dry nonwoven fabric, thermal-bonded dry nonwoven fabric, spun-bonded dry nonwoven fabric, needle-punched dry nonwoven fabric, water jet-punched dry nonwoven fabric, melt-blown dry nonwoven fabric, or flash-spun dry nonwoven fabric may be used. In addition, nonwoven fabric produced by a papermaking method to easily uniformize the basis weight or the thickness can be preferably used. Among them, spunbonded nonwoven fabric is preferred in terms of cost and properties.

As the functions required for the fiber layer, strength, abrasion resistance, bending resistance related to touch texture, and air permeability are optionally required.

Examples of the raw material of the fiber layer that may be used include polyolefins such as polyethylene and polypropylene, polyesters such as polyethylene terephthalate and polylactic acid, polycarbonate, polystyrene, polyphenylene sulfite, fluororesin, and a mixture thereof. Among these, polyolefins or a polylactic acid-based material is/are preferable in terms of electret performance. Among polyolefins, a polypropylene-based material is more preferable, and the fiber layer preferably has the same material as the above-mentioned electret nonwoven fabric layer, from the viewpoint of processability at the time of bonding.

The fiber layer preferably has a tensile strength of 5 N/50 mm or more. The tensile strength thereof is more preferably 10 N/50 mm or more, and even more preferably 15 N/50 mm or more. When the tensile strength is 200 N/50 mm or more, it is required to significantly enhance the strength of the constituent fiber and to increase the basis weight, which fails to obtain softness as the dust-proof material. Thus, the tensile strength thereof is preferably less than 200 N/50 mm.

The abrasion resistance in accordance with Taber type method described in JIS L 1913:2010 (6.6.1) is preferably grade 3 or higher, and more preferably grade 4 or higher.

The bending resistance by the 41.5° cantilever method specified in JIS L 1913:2010 (6.7.1) is preferably 150 mm or less, more preferably 130 mm or less, and even more preferably 100 mm or less. When the bending resistance exceeds 150 mm, the fabric stiffness is high, causing stiffening of the fabric as a protective clothing.

The fiber layer preferably has an air permeability of 40 $cm^3/cm^2$/s or more, more preferably 80 $cm^3/cm^2$/s or more, and even more preferably 100 $cm^3/cm^2$/s or more. When the air permeability of the fiber layer is 40 $cm^3/cm^2$/s or more, the dust-proof material can easily maintain air permeability. The air permeability can be achieved by basis weight, average fiber diameter, thickness, or the like.

To satisfy these conditions, the fiber layer preferably has a thickness of 0.01 mm or more, and more preferably 0.1 mm or more. It also preferably has a thickness of 5 mm or less, and more preferably 1 mm or less. The fiber layer preferably has a basis weight of 10 $g/m^2$ or more, and more preferably 20 $g/m^2$ or more. It also preferably has a basis weight of 200 $g/m^2$ or less, and more preferably 100 $g/m^2$ or less.

The surface of the fiber layer used in the present invention is preferably functionally processed such as antistatic finish. The antistatic finish preferably includes a method of applying a conductive polymer to the surface or a method of applying a hygroscopic polymer to the surface. At this time, it is desirable to process a surface on the opposite side of a surface in contact with the electret nonwoven fabric layer to be laminated.

This is because when the antistatically finished portion comes in contact with the electret nonwoven fabric layer, electrifying performance may be deteriorated.

<Dust-proof Material>

First, a method for producing the dust-proof material of the present invention will be described. An example of the method includes steps of producing constituent materials and a step of laminating these materials.

A known method may be used in the steps of producing constituent materials. The methods for producing the fiber layer and the electret nonwoven fabric layer is as described above.

Next, a method for laminating the fiber layer and the electret nonwoven fabric layer according to the present invention will be described.

In the dust-proof material of the present invention, the total number of the fiber layer and the electret nonwoven fabric layer is 2 or more.

The fiber layer ensures the strength and abrasion resistance to be used as a dust-proof material. The electret nonwoven fabric layer plays a role of preventing the entry of dust into clothing or has moisture permeability for wearer comfort. Therefore, the dust-proof material preferably has a collection efficiency, which will be defined below, of 65% or more.

The collection efficiency in the present invention refers to a value obtained by the following method. From ten places in the dust-proof material or the protective clothing, samples are taken. The test samples are individually measured with a collecting performance measurement device. The collecting performance measurement device includes a sample holder to hold a measurement sample. The upstream of the sample holder is connected to a dust storing box, and the downstream of the sample holder is connected to a flow meter, a flow control valve, and a blower. The sample holder is equipped with a particle counter and the number of dust particles can be counted at each of the upstream and downstream sides of the measurement sample by operating a switch cock. The sample holder is also equipped with a pressure gauge, which can indicate the static pressure difference between the upstream side and the downstream side of the sample.

When the collecting performance is measured, polystyrene standard latex powder (a 10 mass% polystyrene 0.309U solution available from Nacalai Tesque, Inc. has been diluted 200-fold with distilled water) of 0.3 $\mu$m in diameter is charged in the dust storing box, and the test sample is set to the holder. Airflow is adjusted with the flow control valve so that air passes through a filter at a velocity of 3 m/min. The dust concentration is within a range of 10,000 to 40,000 particles/$2.83 \times 10^{-4}$ m$^3$ (0.01 ft$^3$), and the number of dust particles at the upstream side (D) of the test sample and the number of dust particles at the downstream side (d) thereof are measured three times for each test sample using a particle counter (KC-01E manufactured by RION Co., Ltd.). The collecting performance (%) for the dust particles is determined by the following formula, and an average value of the collecting performance for 10 test samples was calculated.

$$\texttt{Collection efficiency (\%) = [1 - (d/D)] × 100}$$

A fiber sheet capable of collecting more dust gives a smaller number of dust particles at the downstream side and therefore gives a higher collection efficiency.

The dust-proof material used in the present invention preferably has an air permeability of 30 cm$^3$/cm$^2$/s or more, and more preferably 35 cm$^3$/cm$^2$/s or more, in order to allow a wearer of the protective clothing to work in a cool and comfortable state in summer. The upper limit of the air permeability thereof is not limited as long as the collection efficiency is 50% or more.

The dust-proof material of the present invention has a laminated structure of a fiber layer and an electret nonwoven fabric layer, and the total number of these layers is 2 or more. Examples of the laminated structure include as follows. A structure having a fiber layer on the outer surface of the clothing and an electret nonwoven fabric layer on the inner surface thereof; a three-layer structure made of a fiber layer, an electric nonwoven fabric layer, and a fiber layer in this order, in which the electric nonwoven fabric layer is sandwiched between the other two layers; a five-layer structure in which a fiber layer having high abrasion resistance and a fiber layer having high strength are superimposed on each other to form a fiber laminate, and two fiber laminates sandwich an electret nonwoven fabric layer; and a four-layer structure in which two electret nonwoven fabric layers each having different characteristics are laminated on a fiber layer, and another fiber layer is superimposed thereon. Among them, a three-layer structure in which two fiber layers sandwich an electret nonwoven fabric layer is preferable. In this case, a fiber layer having strength and a fiber layer having abrasion resistance may be used. The electret nonwoven fabric itself easily catches powder dust or dirt on its surface, resulting in poor workability during donning or sewing.

The three-layer laminated structure in which two fiber layers sandwich an electret nonwoven fabric layer is preferable because by sandwiching the electret-processed electret nonwoven fabric layer between the fiber layers, the structure has effects of easily maintaining air permeability without deteriorating collection efficiency when air passes therethrough and of preventing dust or dirt from bonding to the surface thereof.

As the method for bonding the fiber layer and the electret nonwoven fabric layer, an ultrasonic adhering process, a thermal adhering process using a hot embossing roll having a pattern height of 1 mm or more, and a bonding process with an adhesive may be used in order to prevent the layers from melting or fusing beyond the desired level due to excessive heat. Further, in order to achieve uniform adhesion in an area where the fiber layer and the electret nonwoven fabric layer are adhered, a bonding process with an adhesive is preferable.

In the ultrasonic bonding process, a method in which a blade that ultrasonically vibrates and adhesion materials are nipped at a pressure of 0.01 MPa to 1 MPa between embossing rolls having a specific pattern, and a vibrator called blade is vibrated at an ultrasonic vibration of 1 thousand to 50 thousand Hz to fuse and adhere pattern portions in contact with the blade, is exemplified. As for the blade, mainly blades made of titanium highly resistant to abrasion are used, and other materials, such as aluminum or stainless alloys, are also employed. Besides, as for the blade width, a blade having a width of 10 to 50 cm is used.

The thermal adhering process that uses a hot embossing roll having a pattern height of 1 mm or more uses a hot embossing roll whose embossing pattern depth is 1 mm or more and, outside the pattern, the adhering process is performed without applying heat to the fabric. The pattern height refers to the distance between an upper portion and a lower portion of an edge that constitutes the embossing pattern of the hot embossing roll. The temperature for the hot embossing is preferably 60°C or higher, more preferably 70°C or higher, and even more preferably 100°C or higher. On the other hand, the temperature is preferably 170°C or lower, more preferably 150°C or lower, and even more preferably 135°C or lower. The nip pressure on the hot embossing roll and the nip rolls that nip the hot embossing roll is preferably 0.5 MPa or more, and more preferably 1 MPa or more. On the other hand, the nip pressure is preferably 10 MPa or less, and more preferably 5 MPa or less.

The adhesive to be used for adhesive bonding is not particularly limited, and a hot-melt adhesive, a powder adhesive, a solution adhesive, or the like may be used. Among them, a hot-melt adhesive is preferable from the viewpoints of cost and uniform coating to the target. Types of the hot-melt adhesive include a synthetic rubber adhesive, an olefin adhesive, or an EVA (ethylene vinyl acetate) adhesives. Among them, a synthetic rubber adhesive or an olefin adhesive is preferable from the viewpoints of high adhesive force and excellent compatibility with the fiber layer and the electret nonwoven fabric layer. When a hot-melt adhesive is used as the adhesive, the upper limit of the melt viscosity at 140°C of the hot-melt adhesive is preferably 20000 mPa•s or lower, more preferably 10000 mPa•s or lower, and even more preferably 5000 mPa•s or lower, from this viewpoint that having such a melt viscosity allows the hot-melt adhesive to be more evenly extruded from a T die. On the other hand, the lower limit of the melt viscosity is preferably 300 mPa•s or more, and more preferably 500 mPa•s.

When the dust-proof material laminated with an adhesive is sewn by thread with a sewing machine, the frictional resistance to the passage of a sewing machine needle through increases, so that problems easily occur such as a broken needle, a dirty needle, a seam skip due to fusion caused by a heating needle, sewing thread breakage, yarn breakage, and seam creases. Moreover, when an adhesive material clogs the eye of a needle or a needle groove, a seam skip or sewing thread breakage is likely to occur.

Then, the softening point of the hot-melt adhesive is preferably 105°C or lower, and more preferably 90°C or lower. On the other hand, the softening point thereof is preferably 70°C or higher, from the viewpoint of stability and storage of the adhesive. When the softening point is within this range, problems such as a broken needle, a dirty needle, a seam skip due to fusion caused by a heating needle, sewing thread breakage, yarn breakage, and seam creases hardly occur. The control of the softening point can be achieved by changing the composition of a thermoplastic elastomer, a tackifier, a mineral oil, and a heat stabilizer in the adhesive. The puncture strength by a sewing machine needle is preferably 1.0 N or less, more preferably 0.9 N or less, and even more preferably 0.8 N or less. On the other hand, the lower limit thereof is preferably 0.3 N or more from the viewpoint of preventing a skipping stitch. The puncture strength by a sewing machine needle can be achieved by using the adhesive material having a softening point within the above range or by controlling the coating amount of the adhesive.

As the method of bonding the fiber layer and the electret nonwoven fabric layer with a hot-melt adhesive, a method of applying a coating of adhesive to a base material from a dotted roll, a method of applying a coating of powder adhesive to a base material and then heating to be adhered, a method of spraying a coating of fused adhesive, or the like may be used. Among them, a method of spraying a coating of hot-melt adhesive from a T-die extruder is preferable. This method allows the fiber layer and the electret nonwoven fabric layer to be bonded to each other without significantly damaging the texture or air permeability of the dust-proof material. Also, the adhesive force of those layers can be enhanced in a low coating amount and the hot-melt adhesive can be more uniformly applied. In the case where the hot-melt adhesive has a melt viscosity at 140°C of 5000 mPa•s or less, the temperature of the hot-melt adhesive when extruded from a T die is preferably 100°C or higher, and more preferably 130°C or higher, from the viewpoint of more uniformly extruding the hot-melt adhesive from the T die. On the other hand, from the viewpoint of suppressing damages to the dust-proof material due to the high temperature hot-melt adhesive, the temperature of the hot-melt adhesive when extruded from the T die is preferably 180°C or lower, and more preferably 160°C or lower. In particular, it is preferable that after the hot-melt adhesive is sprayed, the temperature thereof be lower than the melting point of the base material for the fiber layer and the electret nonwoven fabric layer at the contact position between these layers and the hot-melt adhesive, in terms of maintaining the electret performance.

The amount of the hot-melt adhesive between the fiber layer and the electret layer is preferably 3 $g/m^2$ or less, in terms of maintaining air permeability of the dust-proof material and ease of needle sewing. The amount thereof is more preferably 2.5 $g/m^2$ or less, and even more preferably 2 $g/m^2$ or less. The amount of the hot-melt adhesive is preferably 0.5 $g/m^2$ or more, in terms of maintaining the adhesive strength and applying a uniform coating of hot-melt adhesive. When the amount thereof is set to 3 $g/m^2$ or less, the dust-proof material can maintain the air permeability and be suitable for needle sewing. Also, when the amount thereof is set to 0.5 $g/m^2$ or more, the dust-proof material can be used as fabric without separation at the time of wearing the protective clothing.

In the dust-proof material of the present invention, the fiber layer and the electret nonwoven fabric layer, which are adjacent to each other, are adhered at an area ratio of 5% or more and 10% or less. Herein, the adhesion area ratio can be defined according to the measurement method of the adhesion area of the dust-proof material described in Examples.

From the viewpoints that the flexibility of the dust-proof material is improved and the protective clothing made of such material gives more excellent wearability, it is preferable that in the dust-proof material of the present invention, the adhered region on the interlayer formed with the fiber layer and the electret nonwoven fabric layer, which are adjacent to each other, be in a more uniformly adhered state. For example, in the case where the size of the sample in the method of measuring the adhesion area of the dust-proof material described in Examples is set to 20 mm square to 10 mm square, the adhesion area ratio between the layers obtained by the measurement method is preferably 5% or more and 10% or less, and even in the case where the size in the method of measuring the adhesion area of the dust-proof material described in Examples is set to 20 mm square to 5 mm square, the adhesion area ratio of the dust-proof material obtained by the measurement method is preferably 5% or more and 10% or less.

As means of more uniformly providing the size and arrangement of the adhered region of the interlayer formed of the fiber layer and the electret nonwoven fabric layer, which are adjacent to each other, the following method may be used. A method of controlling an embossed pattern of the embossing roll used in the ultrasonic bonding process or the thermal adhering process. The method of spraying a coating of fused adhesive includes coating with a suitable amount of adhesive by a nozzle having a suitable shape for spraying the adhesive. In particular, curtain spray is preferable in terms of applying a uniform coating of hot-melt adhesive to the dust-proof material.

By adhering the interlayer formed of the fiber layer and the electret nonwoven fabric layer, which are adjacent to each other, various strengths of the dust-proof material are enhanced.

Also, by adhering the layers in the region having an area ratio of 5% or more and 10% or less, the dust-proof material can be excellent in both tensile strength and air permeability. The adhesion area ratio should be 5% or more, and is preferably 7% or more. An excessively low adhesion area ratio decreases the tensile strength of the dust-proof material, and when the dust-proof material is made into a chemical protective clothing, the durability of the clothing tends to decrease. On the other hand, the adhesion area ratio should be 10% or less, and is preferably 8% or less. An excessively high adhesion area ratio decreases the air permeability of the dust-proof material and tends to stiffen the dust-proof material, which in turn is likely to deteriorate the wearability of the protective clothing. In the adhesion portion between the fiber layer and the electret nonwoven fabric layer, it is preferable that the fibers toward the other layer in either or both of the layers be partially or entirely fused into a film shape. The thickness of the film shaped portion is preferred to be in the range of 0.01 to 0.5 mm, and a preferred area of the adhesion portion is in the range of 0.001 mm$^2$ to 100 mm$^2$. The thickness thereof is obtained by cutting the cross-section of the adhesion portion and then photographing the cross section area at a magnification by SEM photo. In the case of the ultrasonic bonding process or of ultrasonics in the thermal adhering process using a hot embossing roll having a pattern height of 1 mm or more, the adhesion area can be obtained using a digital microscope (VHX2000) manufactured by Keyence Corporation.

Any of the above-mentioned methods cause little damage by heat to the fiber layer and the electret nonwoven fabric layer because only the adhesion portion is heated, and shrinkage caused by fusing the material contained in any of the layers over a wide area can be suppressed.

Among the above-mentioned methods, the ultrasonic bonding process is preferable because neither the fiber layer nor the electret nonwoven fabric layer are subjected to heat except the blade and the pattern portion.

Further, in the case where the fiber layer and the electret nonwoven fabric layer, which are adjacent to each other, are adhered with an adhesive, a hot-melt adhesive is preferably used. That is, a method of bonding at least one interlayer formed of the fabric layer and the electret nonwoven fabric layer contained in the dust-proof material of the present invention is preferably a method using a hot-melt adhesive. This method allows the whole region of the interlayer formed of those adjacent layers to be more uniformly adhered, so that the dust-proof material becomes soft, and when the dust-proof material is made into a chemical protective clothing, the wearability becomes more excellent, which is preferable.

The tensile strength of the laminated dust-proof material in an arbitrary direction is preferably 30 N/5cm or more because a rip or the like is further suppressed during the sewing process when the dust-proof material is made into a chemical protective clothing or during wearing of the chemical protective clothing, more preferably 35 N/5 cm or more, and even more preferably 40 N/5 cm or more.

Further, the tensile strength of the laminated dust-proof material in an arbitrary direction is preferably 10 N or more because rip caused during wearing of the chemical protective clothing using the dust-proof material is further suppressed, and more preferably 25 N or more.

The fabric obtained by the lamination can be suitably used as a dust-proof material having high strength, excellent abrasion resistance, capable of inhibiting entry of particulates, having air permeability, and suitable for thread sewing.

<Protective Clothing>

The dust-proof material of the present invention can be suitably used as a protective clothing by sewing into shape such as coveralls, raincoat, gown, or the like. In particular, a coverall type protective clothing is preferable to prevent powder dust such as radioactive materials, asbestos, or incineration ash containing dioxins from entering thereinto.

<Sewing>

The method of sewing the dust-proof material into the protective clothing includes a thread sewing method using thread and a needle, and a sewingless method such as ultrasonic bonding without using thread and a needle. Of these, sewing with a thread sewing machine is preferable because of high processability. Thread sewing employs a conventional sewing machine such as a lock stitch sewing machine or a lock sewing machine in accordance with portions to be sewn. The lock stitch is a process of letting a bobbin thread pass through a loop of a needle thread, which is preferable because it is difficult to be untied and excellent in strength. A lock sewing machine produces a woven seam that has no strong thread tightness and accommodates fabric elasticity, which is preferable. The thickness of the sewing machine needle is selected depending on the fabric construction, and generally, a 9-gauge needle (0.67 mm in diameter) is used for thin fabric and a 16-gauge needle (1.02 mm in diameter) is used for thick fabric. When a thin fabric is sewn with a thick needle, a thread in the fabric may be cut or the fabric may be torn at a seam upon the application of excessive force. Conversely, when a thick fabric is sewn with a thin needle, the needle may be bent or broken. As for the protective clothing, 11 to 16-gauge needles are preferable. As for the sewing thread, commercially available yarns such as a spun yarn, a wooly yarn, and a highly crimped woolly yarn can be used. The sewing thread yarn counts from 30 to 90 can be used. As for the yarn material, natural fibers such as silk and cotton, and synthetic fibers such as polyester and nylon made from petroleum or the like may be used. In particular, polyester is preferably used in terms of weatherability. The number of stitches is adjusted to required seam strength, and 5 stitches/3 cm to 10 stitches/3 cm are suitable.

The collection efficiency of the sewn portion is preferably 50% or more. Such collection efficiency can prevent harmful substances including radioactive materials from flowing into the protective clothing by inadvertently flowing outside air from the seam. The seam having a collection efficiency of 50% or more can be achieved by closing the seam with a seam tape or by reducing the thickness of the sewing needle.

EXAMPLES

The following Examples are given in further illustration of the present invention.

[Measurement Methods]

(1) Mass (Basis Weight: $g/m^2$) Per Unit Area Measurement was performed in accordance with JIS L 1913:2010 6.2. From a test sample, three or more test pieces having a size of 25 cm $\times$ 25 cm were collected using a punching die or a template and a razor blade. Their weights were measured and an average value thereof was found. The average value was determined as a mass ($g/m^2$) per unit area.

(2) Collection Efficiency

A total of ten pieces of the dust-proof material, including four from both thighs, four from both arms, and two from the torso of the protective clothing, were cut out to collect 10 samples. The test samples were individually measured with a collecting performance measurement device. As samples of the sewn portion, a total of ten samples, including four from both thighs, four from both arms, and two from the torso of the protective clothing, were collected from the protective clothing after C method specified in JIS T 8115 (2015) Annex A was performed. The collecting performance measurement device includes a sample holder to hold a measurement sample. The upstream of the sample holder is connected to a dust storing box, and the downstream of the sample holder is connected to a flow meter, a flow control valve, and a blower. The sample holder is equipped with a particle counter and the number of dust particles can be counted at each of the upstream and downstream sides of the measurement sample by operating a switch cock. The sample holder is also equipped with a pressure gauge, which can indicate the static pressure difference between the upstream side and the downstream side of the sample.

When the collecting performance was measured, polystyrene standard latex powder (a 10 mass% polystyrene 0.309U solution available from Nacalai Tesque, Inc. has been diluted 200-fold with distilled water) of 0.3 $\mu$m in diameter was charged in the dust storing box, and the test sample was set to the holder. Airflow was adjusted with a flow control valve so that air passes through a filter at a velocity of 3 m/min. The dust concentration was stabilized within a range of 10,000 to 40,000 particles/2.83 $\times$ $10^{-4}$ $m^3$ (0.01 $ft^3$), and the number of dust particles at the upstream side (D) of the sample and the number of dust particles at the downstream side (d) thereof were measured three times for each sample using a particle counter (KC-01E manufactured by RION Co., Ltd.). The collecting performance (%) for the dust particles was determined by the following formula, and an average value of the collecting performance for 10 samples was calculated.

$$\text{Collection efficiency (\%)} = [1 - (d/D)] \times 100$$

(3) Charge Density

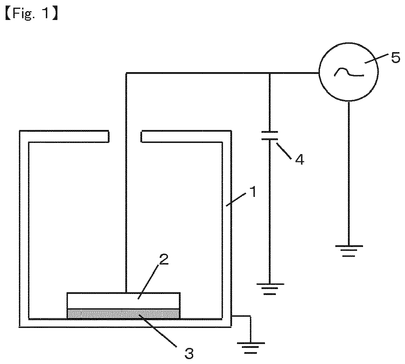

A description will be provided referring to Fig. 1. A test piece 3 was sandwiched between an electrically grounded metal box 1 and a metal plate electrode 2 (area: 100 cm$^2$, material: brass). As for an electric charge generated by electrostatic induction, a voltage was measured with an electrometer 5 via a capacitor 4, and a surface charge density was calculated from the measured voltage by the following expression:

$$Q = C \times V/S$$

Q:     Surface charge density (coulomb/cm$^2$)
     C: Capacity of capacitor
     V: Potential
S:     Plate electrode area

(4) Air Permeability

According to JIS L 1913 6.8.1 a) Frazier type method, the amount of air passing through a test piece having a size of 15 cm $\times$ 15 cm was measured at n=3, and the average value was determined as air permeability.

(5) Wearability

A test subject wearing a protective clothing over a T-shirt ("AIRism" (registered trademark), manufactured by UNIQLO Co., Ltd.) and a pair of working pants (10% cotton, 90% polyester) entered a constant temperature, constant humidity chamber set at 35°C and 50% Rh simulating an outside air temperature in summer. The subject had near the center of the chest a thermocouple stuck to the outer side of the shirt, and the temperature inside the protective clothing after the subject entered the chamber was measured by the thermocouple. This was performed on three subjects. The data from the three subjects were compared with those regarding the protective clothing of Comparative Example 1. A protective clothing that, 30 minutes after, had an average temperature therein that was at least 2°C lower was evaluated as A, and a protective clothing that had an average temperature difference that was less than 2°C was evaluated as B.

(6) Wearing Test

A test subject wore the protective clothing at a temperature of 30°C or higher in summer (from July to September) and worked outside for an hour. A protective clothing that had excellent workability without producing particularly stuffy feeling and had no rip or the like was evaluated as A; a protective clothing that produced slightly stuffy feeling, but still had good workability and had no rip or the like was evaluated as B; a protective clothing that produced highly stuffy feeling and had poor workability, but yet had no rip or the like was evaluated as C; and a protective clothing that produced extremely high stuffy feeling, had bad workability, and had rip or the dust-proof material peeled therefrom was evaluated as D. This was performed on one test subject.

(7) Tensile Strength (Spunbonded Nonwoven Fabric and Dust-proof Material)

Measurement was performed in accordance with JIS L 1913: 2010 6.3.1. Test pieces each having a size of 5 cm $\times$ 30 cm were subjected to a tensile test using a constant rate extension type tensile tester with respect to three samples for each of the sheet machine direction and cross direction in conditions of the length of the test piece between grips being 20 cm and the tension speed being 10 cm/min. The maximum strength at the time of pulling the sample until it ruptured was determined as the tensile strength. An average value of maximum tenacities for each of the sample longitudinal direction and lateral direction was calculated. The term "machine direction" used herein refers to a direction parallel to the roll length direction of the sample, and the term "cross direction" used herein refers to a direction perpendicular to the roll length direction of the sample.

(8) Tear Strength (Dust-proof Material)

Measurement was performed in accordance with C method (trapezoid method) specified in JIS L 1913:2010 8.15.4. The tear strengths of samples each having a size of 7.5 cm × 15 cm in the machine and cross directions were measured at n=3 and an average value of the measurements was calculated. The term "machine direction" used herein refers to a direction parallel to the roll length direction of the sample, and the term "cross direction" used herein refers to a direction perpendicular to the roll length direction of the sample.

(9) Thickness

Measurement was performed in accordance with A method specified in JIS L 1913:2010 6.1.1. Ten test pieces having a size of 2500 mm² or more were collected from a test sample, a pressure of 0.5 kPa was applied to an upper circular horizontal plate of the thickness gauge, and the zero point was adjusted. After that, using the thickness gauge, a pressure of 0.5 kpa was applied to each test piece for 10 seconds in a standard state to measure the thickness to 0.01 mm. An average value for 10 test pieces was found.

(10) Abrasion Resistance

Measurement was performed in accordance with a) Taber type method specified in JIS L 1913:2010 6.6.1. Three test pieces were collected, a wear wheel of CS-10 was applied thereto at 100 rotations (number of wheel rotations), and when compared with the limit photograph for judgments of attached drawing 1, the appearance change was expressed in grade by rounding off the average value by 0.5 grades.

(11) Bending Resistance

Measurement was performed in accordance with a) 41.5° Cantilever method specified in JIS L 1913:2010 6.7.1. Three test pieces were collected from the machine direction and measured. In the case where the bending resistance was different between the front and back of the test sample, the test was conducted for each of the front and back thereof. An average value in the machine direction was determined as bending resistance.

(12) Average Fiber Diameter

A total of ten pieces of the dust-proof material, including four from both thighs, four from both arms, and two from the torso of the protective clothing, were cut out. The pieces of the dust-proof material were photographed at a magnification of 500 times with an electron microscope, the diameters of any 15 fibers per photograph were measured, the measurement was performed for 10 photographs, and an average fiber diameter was expressed by the average value thereof.

(13) Adhesion Area Ratio

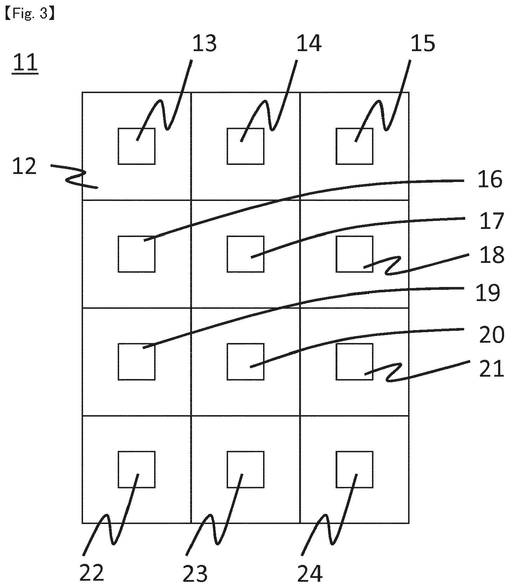

Reference was made to Fig. 3. A rectangular dust-proof material 11 having a size of 240 mm on a long side by 180 mm on a short side was prepared. The long side of the dust-proof material 11 was divided into four equal parts and the short side thereof was divided into three equal parts, to thereby obtain 12 pieces of a small dust-proof material 12 each having a size of 60 mm square. Next, a 20 mm square sample was cut out from the small dust-proof material 12 thus divided, the sample having the same center point as the small dust-proof material 12, and two sides being parallel to the long side of the dust-proof material 11, the remaining two sides being parallel to the short side thereof. As a result, a total of 12 samples A to L were obtained. Samples A to L herein correspond to samples 13 to 24 shown in Fig. 3, respectively.

The fiber layer was separated from each of the samples described above, to thereby obtain 12 separated fiber layers A to L. Adhesives and fibers derived from the electret nonwoven fabric layer remained adhered on the surfaces of the above 12 separated fiber layers that had been adhered to the electret nonwoven fabric layer. There were two kinds of electret nonwoven fabric-derived fibers that remained adhered on the fiber layer, including a fiber adhering on the fiber layer with the adhesive (hereinafter referred to as a fiber 9) and a fiber adhering on the fiber layer without being in contact with the adhesive (hereinafter referred to as a fiber 10). Next, among the obtained 12 separated fiber layers A to L, six separated fiber layers A to F were parted. The above-mentioned two kinds of electret nonwoven fabric layer-derived fibers were entirely eliminated from the surfaces of separated fiber layers A to F that had been adhered to the electret nonwoven fabric layer. These were determined as separated, nonwoven fabric fiber-eliminated fiber layer samples A to F.

As for the remaining six separated fiber layers G to L of the above-mentioned 12 separated fiber layers A to L, the fibers 10 alone were removed from the surface of the separated fiber layer that had been adhered to the electret nonwoven fabric layer by sanding with a sandpaper #320. These were determined as separated, nonwoven fabric fiber portion-eliminated fiber layer samples G to L.

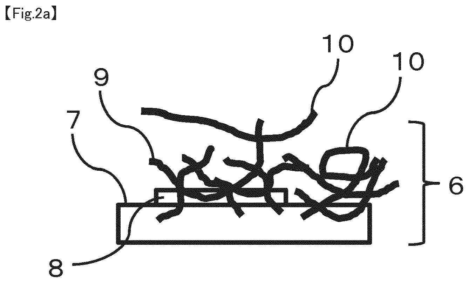

Herein, a conceptual view showing any cross section of separated fiber layers A to L is shown in Fig. 2a. An adhesive 8 and the electret nonwoven fabric layer-derived fibers were adhered on a surface 7 of a separated fiber layer 6 that had been adhered to the electret nonwoven fabric layer. The electret nonwoven fabric layer-derived fibers include the fibers 9 and the fibers 10.

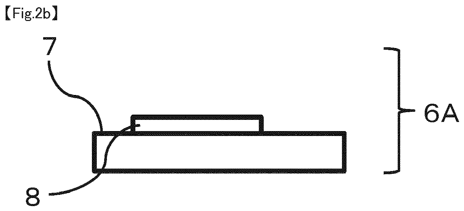

A separated, nonwoven fabric fiber-eliminated fiber layer 6A is shown in Fig. 2b. This shows an embodiment of separated, nonwoven fabric fiber-eliminated fiber layer samples A to F described above. The adhesive 8 alone is adhered at the separated, nonwoven fabric fiber-eliminated fiber layer 6A. Therefore, a fiber portion (a portion where an adhesive is not adhered) and a non-fiber portion (a portion where an adhesive is adhered) are present on the surface of the side where the fiber layer samples A to F had been adhered on the electret nonwoven fabric layer.

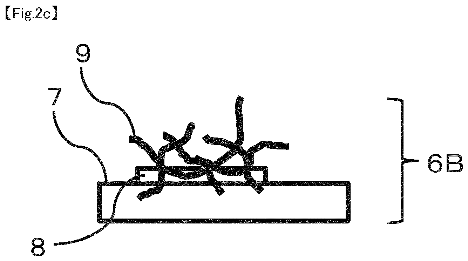

A separated, nonwoven fabric portion-eliminated fiber layer sample 6B is shown in Fig. 2c. This corresponds to separated, nonwoven fabric portion-eliminated fiber layer samples G to L described above. The adhesive 8 and the fibers 9 are adhered at the separated, nonwoven fabric fiber portion-eliminated fiber layer sample 6B.

The resulting surfaces of separated fiber layer samples A to F and G to L that had been adhered to the electret nonwoven fabric layer were photographed by using a digital microscope manufactured by Keyence (VHX2000) and setting a magnification to 150 times and a threshold value to -60 so that each of the separated fiber layer samples was within the field of view of the microscope. Next, the resulting sample pictures were divided into four portions at the centers of the long sides and at the centers of the short sides. Further, using a method of calculating the fiber portion area by the difference of luminance in the upper left portion of the four-divided picture, the fiber portion areas in the surfaces of the separated fiber layer samples that had been adhered to the electret nonwoven fabric layer were calculated. Herein, the fiber portion areas in the surfaces of the separated fiber layer samples A to L were determined as S1 to S12, respectively, and then values obtained by the formulae of $(S7-S1)/S7 \times 100$, $(S8-S2)/S8 \times 100$, $(S9-S3)/S9 \times 100$, $(S10-S4)/S10 \times 100$, $(S11-S5) / S11 \times 100$, and $(S12-S6)/S12 \times 100$ were determined as adhesion areas and the six adhesion areas were calculated. Herein, the alphabets of the samples, separated fiber layers, and fiber layer samples correspond to one another. For example, separated fiber layer A and fiber layer sample A are derived from fiber layer A. In the dust-proof material having two or more interlayers formed with the fiber layer and the electret nonwoven fabric layer, the same measurement as above was performed on each of the interfaces to calculate the adhesion areas thereof.

(14) Melt Viscosity

Measurement was performed in accordance with a measurement method with a single cylindrical rotating viscometer specified in JIS Z 8803 9.4.4. A B-type rotating viscometer (manufactured by Brookfield Engineering Laboratories, Inc.) was used to find a viscosity at 140°C.

(15) Comfort Evaluation

In a constant temperature, constant humidity chamber set at 20°C and 50%Rh, a test subject wore a protective clothing over a T-shirt ("AIRism" (registered trademark), manufactured by UNIQLO Co., Ltd.) and a set of working clothes (10% cotton, 90% polyester), and also wore protectors (rubber gloves, a helmet, and boots) to be fixed with an adhesive tape. The subject attached "ONDOTORI"(registered trademark, TR-71nw manufactured by T & D Corporation) around the center of the back over the shirt, and after entering the chamber, the subject stepped (14 steps / 10 seconds) and the humidity in the protective clothing was measured every 10 seconds. A fan (YT-4001K(WH) manufactured by Yuasa) was set to the air volume of "medium" and sent an air from a position 50 cm apart from the back of the subject. This was performed on three test subjects. The data from the three subjects were compared with those regarding the protective clothing of Comparative Example 1. A protective clothing that, 45 minutes after, had the average humidity therein that was at least 20% lower was evaluated as A, a protective clothing that had the average humidity therein that was at least 10% lower and less than 20% lower was evaluated as B, and a protective clothing that had an average humidity difference that was less than 10% was evaluated as C.

(16) Puncture Strength

Measurement was performed in accordance with JIS T 8051:2005. A total of four test pieces having a diameter of 55 mm, including two from thigh portions and two from both arms of the protective clothing, were collected as test samples of the dust-proof material. A puncture test was performed with a constant rate extension type tensile tester at a needle entry speed of 100 mm/min and an average value of the four test pieces was found.

(17) Puncture Strength By Sewing Machine Needle

Measurement was performed in accordance with JIS T 8051: 2005 item (16), except that the piercing part of the piercing tool was changed to a sewing machine needle No. 14. A total of four test pieces having a diameter of 55 mm, including two from thigh portions and two from both arms of the protective clothing, were collected as a test sample of the dust-proof material. A 15 mm puncture test was performed with a constant rate extension type tensile tester at a needle entry speed of 100 mm/min and an average value of the four test pieces was found.

(18) Peel Strength

Measurement was performed in accordance with a method described in JIS L 1089:2007. Test pieces were peeled off at the interface between the fiber layers to create triggers, and then cut so as to have a size of 25 mm in width and 300 mm in length using a universal testing machine (Autograph AG-IS manufactured by Shimadzu Corporation). The test pieces were then subjected to a T-shaped (180°) peel test using a constant rate extension type tensile tester with respect to three samples for each of the sheet machine direction and cross direction in conditions of the length of test piece between grips being 50 mm and the tension speed being 150 mm/min. For evaluation, as shown in Fig. 5 of JIS L 1089:2007, a total of six values, including three in order from the maximum value obtained at the time of peeling and three in order from the minimum value, were collected and an average value was calculated.

(19) Thread Sewing Test

Two dust-proof materials were overlaid and continuously sewn for 30 m. Sewing was performed using a single needle lock-stitch sewing machine in conditions of needle #11, polyester thread #90, and 10 stiches/3 cm, and a sewn material that had no irregularities observed was determined as G, and a sewn material that had a seam skip, seam creases, breakage of a sewing machine needle, or thread breakage was determined as P.

(20) Texture

The dust-proof materials were touched with hand, and a dust-proof material having a tacky feel of the hot-melt adhesive was determined as ×, and a dust-proof material having no tacky feel of the hot-melt adhesive was determined as ○.

(21) Powder Dust Leakage Test

Measurement was performed in accordance with the method described in JIS T 8032-2:2015. A test result that met JIS standards was determined as Passed, and one that did not meet was determined as Failed.

(Fabric For Fiber Layer)

The following fabric was used as the fiber layer. The properties thereof were shown in Table 1.

<Spunbonded Fabric 1>

Polypropylene spunbonded nonwoven fabric (air permeability: 220 cm$^3$/cm$^2$/s, basis weight: 15 g/m$^2$, tensile strength: 46.3 N/50 mm in machine direction, 17.5 N/50 mm in cross direction, abrasion resistance: 4.5 grades, bending resistance: 73 mm)

[Table 1]

[Table 1]

| Material | Air permeability cm$^3$/cm$^2$/s 125Pa | Basis weight g/m$^2$ | Thickness mm | Tensile strength N/50mm | | Abrasion resistance Grade | Bending resistance mm |
|---|---|---|---|---|---|---|---|
| | | | | Machine direction | Cross direction | | |
| Spunbonded fabric 1 | 220 | 15 | 0.1 | 46.3 | 17.5 | 4.5 | 73 |

(Fabrics For Electret Nonwoven Fabric Layer)

The following fabrics were used as the electret nonwoven fabric layer and as control fabrics used in Comparative Examples . The properties thereof were shown in Table 2.

<Electret Nonwoven Fabric 1>

Polypropylene meltblown nonwoven fabric (containing 1% by mass of hindered amine additive, electret processed, charge density: $8.5 \times 10^{-9}$ coulomb/cm$^2$, air permeability: 44 cm$^3$/cm$^2$/s, basis weight: 20 g/m$^2$, average fiber diameter 2 $\mu$m)

<Electret Nonwoven Fabric 2>

Polypropylene meltblown nonwoven fabric (containing 1% by mass of hindered amine additive, electret processed, charge density: $8.5 \times 10^{-9}$ coulomb/cm$^2$, air permeability: 95 cm$^3$/cm$^2$/s, basis weight: 18 g/m$^2$, average fiber diameter: 4 $\mu$m)

<Electret Nonwoven Fabric 3>

Polypropylene meltblown nonwoven fabric (containing 1% by mass of hindered amine additive, electret processed, charge density: $8.5 \times 10^{-9}$ coulomb/cm$^2$, air permeability: 120 cm$^3$/cm$^2$/s, basis weight: 16 g/m$^2$, average fiber diameter: 6 $\mu$m)

[Table 2]

[Table 2]

| Material | Electret processing | Charge density coulomb/cm$^2$ | Air permeability cm$^3$/cm$^2$/s | Basis weight g/m$^2$ | Average fiber diameter $\mu$m |
|---|---|---|---|---|---|
| Electret nonwoven fabric | Processed | $8.5 \times 10^{-9}$ | 44 | 20 | 2 |
| Electret nonwoven fabric | Processed | $8.5 \times 10^{-9}$ | 95 | 18 | 4 |
| Electret nonwoven fabric | Processed | $8.5 \times 10^{-9}$ | 120 | 16 | 6 |

(Adhesive)

(A) Hot-melt Adhesive A
"MORESCO-MELT" TN-367Z (manufactured by MORESCO Corporation), melt viscosity at 140°C: 1200 mPa•s, softening point: 82°C

(B) Hot-melt Adhesive B

"MORESCO-MELT" TN-255Z (manufactured by MORESCO Corporation), melt viscosity at 140°C: 14250 mPa•s, softening point: 102°C

(C) Hot-melt Adhesive C

"MORESCO-MELT" AC-831Z (manufactured by MORESCO Corporation), melt viscosity at 160°C: 4000 mPa•s, softening point: 122°C

Example 1

Using a hot-melt adhesive machine, hot-melt adhesive A that had been fused by heating to 150°C was sprayed from a T die to coat a first surface of an electret nonwoven fabric 1 so that the coating amount was 2 $g/m^2$, and thereafter, a spunbonded fabric 1 was bonded to the first surface of the electret nonwoven fabric 1. Then, the resulting two-layer laminate of spunbonded fabric 1/electret nonwoven fabric 1 was wound up. The laminate was turned upside down, and again, the hot-melt adhesive A was sprayed to coat a second surface of the electret nonwoven fabric 1 so as to have a coating amount of 2 $g/m^2$ in the same manner as the above step, and thereafter a spunbonded fabric 1 was bonded to the second surface of the electric nonwoven fabric 1. As a result, a dust-proof material 1 having a structure of spunbonded fabric 1/electret nonwoven fabric 1/spunbonded fabric 1 in this order was obtained. The structure of the dust-proof material 1 thus obtained was shown in Table 3 and the measurement results of the characteristics were shown in Tables 4 to 6. The dust-proof material 1 had a basis weight of 60 $g/m^2$, a collection efficiency of 92% in the fabric portion and 89% in the sewn portion, and an air permeability of 42 $cm^3/cm^2/s$, in which the maximum value of the adhesion area ratios in six observed regions was 9% and the minimum value thereof was 7%. Dust-proof material 1 also had a tensile strength of 103.3 N/50 mm in the machine direction and 50.3 N/50 mm in the cross direction, and a tear strength of 15.4 N in the machine direction and 30.2 N in the cross direction.

The dust-proof material 1 thus obtained was aligned with a pattern paper and then cut into a patterned piece. A portion to be sewn of the cut material was sewn with highly crimped woolly yarns as needle thread and looper thread at 8 stitches/3 cm using a one-needle/three-thread overlock sewing machine. To attach a zipper, lock stitching was employed with spun yarn #60 of polyester to sew at 6 stitches/3 cm with a sewing machine. When a coverall-type chemical protective clothing was made by these methods, no rip or tear occurred in the fabric during sewing, resulting in good sewability. Further, when wearability was evaluated under an atmosphere of 35°C and 50%Rh, the temperature difference from that of Comparative Example 1 was -3.5°C. Therefore, the wearability was evaluated as A, and the wearing test was evaluated as A. As for the comfort evaluation, the humidity was lower than that of Comparative Example 1 by 21%Rh, which was evaluated as A.

Example 2

A Dust-proof material 2 having a structure of spunbonded fabric 1/electret nonwoven fabric 1/spunbonded fabric 1 in this order was obtained in the same manner as in Example 1, except that the coating amount of the hot-melt adhesive to the first surface of electret nonwoven fabric 1 was 1 $g/m^2$. The structure of the dust-proof material 2 thus obtained was shown in Table 3 and the measurement results of the characteristics were shown in Tables 4 to 6. The dust-proof material 2 had a basis weight of 58 $g/m^2$, a collection efficiency of 91% in the fabric portion and 89% in the sewn portion, and an air permeability of 44 $cm^3/cm^2/s$, in which the maximum value of the adhesion area ratios in six observed regions was 6% and the minimum value thereof was 5%. Dust-proof material 2 also had a tensile strength of 98.5 N/50 mm in the machine direction and 45.9 N/50 mm in the cross direction, and a tear strength of 13.0 N in the machine direction and 28.8 N in the cross direction.

When a coverall-type chemical protective clothing having the same size as that of Example 1 was made using the dust-proof material 2 by the same step as in Example 1, no dust was adhered on the fabric during sewing, resulting in good sewability. Further, when wearability was evaluated under an atmosphere of 35°C and 50%Rh, the temperature difference from that of Comparative Example 1 was -3.6°C. Therefore, the wearability was evaluated as A, and the wearing test was evaluated as A. As for the comfort evaluation, the humidity was lower than that of Comparative Example 1 by 25%Rh, which was evaluated as A.

Example 3

A dust-proof material 3 having a structure of spunbonded fabric 1/electret nonwoven fabric 1/spunbonded fabric 1 in this order was obtained in the same manner as in Example 1, except that the coating amount of the hot-melt adhesive to the first surface of the electret nonwoven fabric 3 was 4 $g/m^2$. The structure of the dust-proof material 3 thus obtained was shown in Table 3 and the measurement results of the characteristics were shown in Tables 4 to 6. The dust-proof material 3 had a basis weight of 64 g/m$^2$, a collection efficiency of 93% in the fabric portion and 89% in the sewn portion, and an air permeability of 38 cm$^3$/cm$^2$/s, in which the maximum value of the adhesion area ratios in six observed regions was 10% and the minimum value thereof was 8%. The dust-proof material 3 also had a tensile strength of 106.8 N/50 mm in the machine direction and 54.4 N/50 mm in the cross direction, and a tear strength of 17.2 N in the machine direction and 32.5 N in the cross direction.

When a coverall-type chemical protective clothing having the same size as that of Example 1 was made using the dust-proof material 3 by the same step as in Example 1, no dust was adhered on the fabric during sewing, resulting in good sewability. In the thread sewing test, however, seam puckering occurred. The puncture strength by a sewing machine needle was 1.06 N. Further, when wearability was evaluated under an atmosphere of 35°C and 50%Rh, the temperature difference from that of Comparative Example 1 was -2.9°C. Therefore, the wearability was evaluated as A, and the wearing test was evaluated as B. As for the comfort evaluation, the humidity was lower than that of Comparative Example 1 by 19%Rh, which was evaluated as B.

Example 4

A dust-proof material 4 having a structure of spunbonded fabric 1/electret nonwoven fabric 1/spunbonded fabric 1 in this order was obtained in the same manner as in Example 1, except that the hot-melt adhesive A was changed to a hot-melt adhesive B, and the coating amount was 1 g/m$^2$. The structure of the dust-proof material 4 thus obtained was shown in Table 3 and the measurement results of the characteristics were shown in Tables 4 to 6. The dust-proof material 4 had a basis weight of 58 g/m$^2$, a collection efficiency of 92% in the fabric portion and 88% in the sewn portion, and an air permeability of 46 cm$^3$/cm$^2$/s, in which the maximum value of the adhesion area ratios in six observed regions was 9% and the minimum value thereof was 6%. The dust-proof material 4 also had a tensile strength of 103.0 N/50 mm in the machine direction and 51.1 N/50 mm in the cross direction, and a tear strength of 15.7 in the machine direction and 30.6 N in the cross direction.

When a coverall-type chemical protective clothing having the same size as that of Example 1 was made using the dust-proof material 4 by the same step as in Example 1, no dust was adhered on the fabric during sewing, resulting in good sewability. Further, when wearability was evaluated under an atmosphere of 35°C and 50%Rh, the temperature difference from that of Comparative Example 1 was -3.5°C. Therefore, the wearability was evaluated as A, and the wearing test was evaluated as A. As for the comfort evaluation, the humidity was lower than that of Comparative Example 1 by 22%Rh, which was evaluated as A.

Example 5

A dust-proof material 5 having a structure of spunbonded fabric 1/electret nonwoven fabric 2/spunbonded fabric 1 in this order was obtained in the same manner as in Example 2, except that the electret nonwoven fabric 1 was changed to an electret nonwoven fabric 2. The structure of the dust-proof material 5 thus obtained was shown in Table 3 and the measurement results of the characteristics were shown in Tables 4 to 6. The dust-proof material 5 had a basis weight of 56 g/m$^2$, a collection efficiency of 55% in the fabric portion and 50% in the sewn portion, and an air permeability of 60 cm$^3$/cm$^2$/s, in which the maximum value of the adhesion area ratios in six observed regions was 9% and the minimum value thereof was 6%. The dust-proof material 5 also had a tensile strength of 104.0 N/50 mm in the machine direction and 52.0 N/50 mm in the cross direction, and a tear strength of 15.9 N in the machine direction and 31.1 N in the cross direction.

When a coverall-type chemical protective clothing having the same size as that of Example 1 was made using the dust-proof material 5 by the same step as in Example 1, no dust was adhered on the fabric during sewing, resulting in good sewability. Further, when wearability was evaluated under an atmosphere of 35°C and 50%Rh, the temperature difference from that of Comparative Example 1 was -3.7°C. Therefore, the wearability was evaluated as A, and the wearing test was evaluated as A. As for the comfort evaluation, the humidity was lower than that of Comparative Example 1 by 26%Rh, which was evaluated as A.

Example 6

A dust-proof material 6 having a structure of spunbonded fabric 1/electret nonwoven fabric 1/spunbonded fabric 1 in this order was obtained in the same manner as in Example 1, except that the hot-melt adhesive A was changed to a hot-melt adhesive C, and the coating amount was 1 g/m$^2$. The structure of the dust-proof material 6 thus obtained was shown in Table 3 and the measurement results of the characteristics were shown in Tables 4 to 6. The dust-proof material 6 had a basis weight of 58 g/m$^2$, a collection efficiency of 90% in the fabric portion and 87% in the sewn portion, and an air permeability of 47 cm$^3$/cm$^2$/s, in which the maximum value of the adhesion area ratios in six observed regions was 9% and the minimum value thereof was 6%. The dust-proof material 6 also had a tensile strength of 129.8 N/50 mm in the machine direction and 50.5 N/50 mm in the cross direction, and a tear strength of 15.1 N in the machine direction and 29.9 N in the cross direction.

When the same coverall-type chemical protective clothing as that of Example 1 was made using the dust-proof material 6, no dust was adhered on the fabric during sewing, resulting in good sewability. When the thread sewing test was conducted, however, a skipping stitch occurred. The puncture strength by a sewing machine needle was 1.03 N. Further, when wearability was evaluated under an atmosphere of 35°C and 50%Rh, the temperature difference from that of Comparative Example 1 was -3.5°C. Therefore, the wearability was evaluated as A, and the wearing test was evaluated as A. As for the comfort evaluation, the humidity was lower than that of Comparative Example 1 by 23%Rh, which was evaluated as A.

Example 7

A dust-proof material 7 having a structure of spunbonded fabric 1/electret nonwoven fabric 3/spunbonded fabric 1 in this order was obtained in the same manner as in Example 2, except that the electret nonwoven fabric 1 was changed to the electret nonwoven fabric 3. The structure of the dust-proof material 7 thus obtained was shown in Table 3 and the measurement results of the characteristics were shown in Tables 4 to 6. The dust-proof material 7 had a basis weight of 54 g/m$^2$, a collection efficiency of 40% in the fabric portion and 35% in the sewn portion, and an air permeability of 90 cm$^3$/cm$^2$/s, in which the maximum value of the adhesion area ratios in six observed regions was 9% and the minimum value thereof was 7%. The dust-proof material 7 also had a tensile strength of 105.2 N/50 mm in the machine direction and 52.2 N/50 mm in the cross direction, and a tear strength of 15.9 N in the machine direction and 30.5 N in the cross direction.

When the same coverall-type chemical protective clothing as that of Example 1 was made using the dust-proof material 7, no dust was adhered on the fabric during sewing, resulting in good sewability. Further, when wearability was evaluated under an atmosphere of 35°C and 50%Rh, the temperature difference from that of Comparative Example 1 was -3.8°C. Therefore, the wearability was evaluated as A, and the wearing test was evaluated as A. As for the comfort evaluation, the humidity was lower than that of Comparative Example 1 by 27%Rh, which was evaluated as A.

Comparative Example 1

A fabric piece was cut from a protective clothing made of one layer of polyethylene flash-spun nonwoven fabric that was commercially available. The properties of the cut piece were measured and the fabric piece was used as a dust-proof material 8. The measurement results are shown in Tables 3 and 4.

The dust-proof material 8 had a basis weight of 40 g/m$^2$, a collection efficiency of 80% in the fabric portion and 80% in the sewn portion, and an air permeability of 0.1 cm$^3$/cm$^2$/s. The dust-proof material 8 also had a tensile strength of 89.8 N/50 mm in the machine direction and 68.0 N/50 mm in the cross direction, and a tear strength of 22.4 N in the machine direction and 16.1 N in the cross direction.

The same commercially available protective clothing as above was worn and the wearability thereof was evaluated under an atmosphere of 35°C and 50%Rh. The measurement results were compared with those of Examples. The dust-proof material 8 was lightweight and mobile as a protective clothing, but rather airless. When the wearing test was conducted, the temperature in the protective clothing reached 34.2°C after 30 minutes, and the inside of the protective clothing became stuffy. Therefore, the wearing feeling was evaluated as B, and the wearing test was evaluated as D, resulting in poor protective clothing. As for the comfort evaluation, the average humidity was 75%Rh.

Comparative Example 2

A dust-proof material 9 having a structure of spunbonded fabric 1/electret nonwoven fabric 1/spunbonded fabric 1 in this order was obtained in the same manner as in Example 1, except that the coating amount of the hot-melt adhesive to the first surface of the electret nonwoven fabric 1 was 0.4 g/m$^2$. The structure of the dust-proof material 9 thus obtained was shown in Table 3 and the measurement results of the characteristics were shown in Tables 4 to 6. The dust-proof material 5 had a basis weight of 57 g/m$^2$, a collection efficiency of 94% in the fabric portion and 89% in the sewn portion, and an air permeability of 45 cm$^3$/cm$^2$/s, in which the maximum value of the adhesion area ratios in six observed regions was 3%, the minimum value thereof was 1%, and all the six adhesion area ratios were thus outside the range of 5% or more and 10% or less. The dust-proof material 9 also had a tensile strength of 92.6 N/50 mm in the machine direction and 38.7 N/50 mm in the cross direction, and a tear strength of 9.2 N in the machine direction and 24.6 N in the cross direction, resulting in poor tensile and tear strengths.

When a coverall-type chemical protective clothing was made using the dust-proof material 9, the spunbonded fabric and the electret nonwoven fabric were partially peeled off during sewing, resulting in poor sewability. Further, when wearability was evaluated under an atmosphere of 35°C and 50%Rh, the temperature difference from that of Comparative Example 1 was -3.6°C. Therefore, the wearability was evaluated as A, and the wearing test was evaluated as D because peeling occurred in the spunbonded fabric and the electret nonwoven fabric during the work, and a rip was partially observed. As for the comfort evaluation, the humidity was lower than that of Comparative Example 1 by 24%Rh, which was evaluated as A.

Comparative Example 3

A dust-proof material 10 having a structure of spunbonded fabric 1/electret nonwoven fabric 1/spunbonded fabric 1 in this order was obtained in the same manner as in Example 1, except that the coating amount of the hot-melt adhesive to the first surface of the electret nonwoven fabric 1 was 8 g/m$^2$. The structure of the dust-proof material 10 thus obtained was shown in Table 3 and the measurement results of the characteristics were shown in Tables 4 to 6. The dust-proof material 10 had a basis weight of 72 g/m$^2$, a collection efficiency of 93% in the fabric portion and 88% in the sewn portion, and an air permeability of 29 cm$^3$/cm$^2$/s, in which the maximum value of the adhesion area ratios in six observed regions was 16% and the minimum value thereof was 14%. The dust-proof material 10 also had a tensile strength of 109.8 N/50 mm in the machine direction and 60.0 N/50 mm in the cross direction, and a tear strength of 20.0 N in the machine direction and 35.2 N in the cross direction.

When a coverall-type chemical protective clothing was made using the dust-proof material 10, no dust was adhered on the fabric during sewing, resulting in good sewability. When the thread sewing test was conducted, however, seam creases occurred. The puncture strength by a sewing machine needle was 1.21 N. Further, when wearability was evaluated under an atmosphere of 35°C and 50%Rh, the temperature difference from that of Comparative Example 1 was -2.5°C. Therefore, the wearability was evaluated as A, and the wearing test was evaluated as C, resulting in rather poor workability during wearing. As for the comfort evaluation, the humidity was lower than that of Comparative Example 1 by 18%Rh, which was evaluated as B.

Comparative Example 4

A dust-proof material 11 having a structure of spunbonded fabric 1/electret nonwoven fabric 1/spunbonded fabric 1 in this order was obtained in the same manner as in Example 1, except that the coating amount of the hot-melt adhesive to the first surface of the electret nonwoven fabric 1 was 12 g/m$^2$. The structure of the dust-proof material 7 thus obtained was shown in Table 3 and the measurement results of the properties were shown in Tables 4 to 6. The dust-proof material 11 had a basis weight of 80 g/m$^2$, a collection efficiency of 92%, and an air permeability of 18 cm$^3$/cm$^2$/s, in which the maximum value of the six adhesion area ratios was 23% and the minimum value thereof was 20%. The dust-proof material 11 also had a tensile strength of 112.6 N/50 mm in the machine direction and 61.2 N/50 mm in the cross direction, and a tear strength of 21.1 N in the machine direction and 36.3 N in the cross direction.

When a coverall-type chemical protective clothing was made using the dust-proof material 11, no dust was adhered on the fabric during sewing, resulting in good sewability. When the thread sewing test was conducted, however, seam puckering and tread breakage occurred. The puncture strength by a sewing machine needle was 1.31 N. Further, when wearability was evaluated under an atmosphere of 35°C and 50%Rh, the temperature difference from that of Comparative Example 1 was -1.8°C. Therefore, the wearability was evaluated as B, and the wearing test was evaluated as D. As for the comfort evaluation, the humidity was lower than that of Comparative Example 1 by 9%Rh, which was evaluated as C.

The protective clothing using the dust-proof material of Examples that meets the requirements of the present invention had air permeability, reduced stuffy feeling during wearing, and was excellent in dressing comfort. The dust-proof material was also suitable for sewing with a sewing machine needle.

[Table 3]

[Table 3]

| | | Material A | Material B | Material C | Hot-melt adhesive | Adhesive Softening point °C | Coating amount of adhesive Basis weight g/m$^2$ | Thread Sewing Test |
|---|---|---|---|---|---|---|---|---|
| Example 1 | Dust-proof material 1 | Spunbonded fabric 1 | Electret nonwoven fabric 1 | Spunbonded fabric 1 | A | 82 | 4.0 | G |
| Example 2 | Dust-proof material 2 | Spunbonded fabric 1 | Electret nonwoven fabric 1 | Spunbonded fabric 1 | A | 82 | 2.0 | G |
| Example 3 | Dust-proof material 3 | Spunbonded fabric 1 | Electret nonwoven fabric 1 | Spunbonded fabric 1 | A | 82 | 8.0 | P |
| Example 4 | Dust-proof material 4 | Spunbonded fabric 1 | Electret nonwoven fabric 1 | Spunbonded fabric 1 | B | 102 | 2.0 | G |
| Example 5 | Dust-proof material 5 | Spunbonded fabric 1 | Electret nonwoven fabric 2 | Spunbonded fabric 1 | A | 82 | 2.0 | G |
| Example 6 | Dust-proof material 6 | Spunbonded fabric 1 | Electret nonwoven fabric 1 | Spunbonded fabric 1 | C | 122 | 2.0 | P |
| Example 7 | Dust-proof material 7 | Spunbonded fabric 1 | Electret nonwoven fabric 3 | Spunbonded fabric 1 | A | 82 | 2.0 | G |
| Comparative Example 1 | Dust-proof material 8 | Flash-spun nonwoven fabric | - | - | - | - | - | - |
| Comparative Example 2 | Dust-proof material 9 | Spunbonded fabric 1 | Electret nonwoven fabric 1 | Spunbonded fabric 1 | A | 82 | 0.8 | G |

(continued)

| | | Material A | Material B | Material C | Hot-melt adhesive | Adhesive Softening point °C | Coating amount of adhesive Basis weight g/m$^2$ | Thread Sewing Test |
|---|---|---|---|---|---|---|---|---|
| Comparative Example 3 | Dust-proof material 10 | Spunbonded fabric 1 | Electret nonwoven fabric 1 | Spunbonded fabric 1 | A | 82 | 16 | P |
| Comparative Example 4 | Dust-proof material 11 | Spunbonded fabric 1 | Electret nonwoven fabric 1 | Spunbonded fabric 1 | A | 82 | 24 | P |

[Table 4]

[Table 4]

|  | Adhesion area (%) | | Air permeability | Collection efficiency | | Powder dust leakage test |
|---|---|---|---|---|---|---|
|  | Minimum | Maximum | cm$^3$/cm$^2$/s | Dust-proof material | Sewn portion | |
| Example 1 | 7 | 9 | 42 | 92 | 89 | Passed |
| Example 2 | 5 | 6 | 44 | 91 | 89 | Passed |
| Example 3 | 8 | 10 | 38 | 93 | 89 | Passed |
| Example 4 | 6 | 9 | 46 | 92 | 88 | Passed |
| Example 5 | 6 | 9 | 60 | 55 | 50 | Passed |
| Example 6 | 6 | 9 | 47 | 90 | 87 | Passed |
| Example 7 | 7 | 9 | 90 | 40 | 35 | Failed |
| Comparative Example 1 | - | - | 0.1 | 80 | 80 | Passed |
| Comparative Example 2 | 1 | 3 | 45 | 94 | 89 | Passed |
| Comparative Example 3 | 14 | 16 | 29 | 93 | 88 | Passed |
| Comparative Example 4 | 20 | 23 | 18 | 92 | 88 | Passed |

[Table 5]

[Table 5]

|  | Tensile strength | | Tear strength | | Puncture strength | Puncture strength by sewing machine needle |
|---|---|---|---|---|---|---|
|  | Machine direction | Cross direction | Machine direction | Cross direction | | |
|  | N/50mm | N/50mm | N | N | N | N |
| Example 1 | 103.3 | 50.3 | 15.4 | 30.2 | 8.4 | 0.86 |
| Example 2 | 98.5 | 45.9 | 13.0 | 28.8 | 8.1 | 0.74 |
| Example 3 | 106.8 | 54.4 | 17.2 | 32.5 | 8.9 | 1.06 |
| Example 4 | 103.0 | 51.1 | 15.7 | 30.6 | 8.5 | 0.82 |
| Example 5 | 104.0 | 52.0 | 15.9 | 31.1 | 8.1 | 0.75 |
| Example 6 | 129.8 | 50.5 | 15.1 | 29.9 | 8.6 | 1.03 |
| Example 7 | 105.2 | 52.2 | 15.9 | 30.5 | 8.2 | 0.74 |
| Comparative Example 1 | 89.8 | 68.0 | 22.4 | 16.1 | 14.0 | 1.29 |
| Comparative Example 2 | 92.6 | 38.7 | 9.2 | 24.6 | 7.9 | 0.48 |

(continued)

|  | Tensile strength | | Tear strength | | Puncture strength | Puncture strength by sewing machine needle |
| --- | --- | --- | --- | --- | --- | --- |
|  | Machine direction | Cross direction | Machine direction | Cross direction | | |
|  | N/50mm | N/50mm | N | N | N | N |
| Comparative Example 3 | 109.8 | 60.0 | 20.0 | 35.2 | 9.2 | 1.21 |
| Comparative Example 4 | 112.6 | 61.2 | 21.1 | 36.3 | 9.5 | 1.31 |

[Table 6]

[Table 6]

|  | Peel Strength | Texture | Wearability | Wearing test | Comfort Evaluation |
| --- | --- | --- | --- | --- | --- |
| Example 1 | 0.7 | ○ | A | A | A |
| Example 2 | 0.6 | ○ | A | A | A |
| Example 3 | 0.8 | × | A | B | B |
| Example 4 | 0.7 | ○ | A | A | A |
| Example 5 | 0.6 | ○ | A | A | A |
| Example 6 | 0.7 | ○ | A | A | A |
| Example 7 | 0.6 | ○ | A | A | A |
| Comparative Example 1 | Not peeled | ○ | B | D | - |
| Comparative Example 2 | 0.4 | ○ | A | D | A |
| Comparative Example 3 | 0.9 | × | A | C | B |
| Comparative Example 4 | 1.2 | × | B | D | C |

INDUSTRIAL APPLICABILITY

The protective clothing using the dust-proof material according to the present invention is applicable to wear in an atmosphere containing powder dust.

DESCRIPTION OF REFERENCE SIGNS

1: Metal box
2: Metal plate electrode
3: Test sample
4: Capacitor
5: Electrometer
6: Separated fiber layer

  6A: Separated, nonwoven fabric fiber-eliminated fiber layer
  6B: Separated, nonwoven fabric fiber portion-eliminated fiber layer

7: Surface that had been adhered to electret nonwoven fabric layer
8: Adhesive

9: Electret nonwoven fabric layer-derived fibers adhering on the fiber layer with the adhesive

10: Electret nonwoven fabric layer-derived fibers adhering on the fiber layer without being in contact with the adhesive

11: Dust-proof material

12: Small dust-proof material

13 to 24: Samples A to L

**Claims**

1. A dust-proof clothing using the following dust-proof material, wherein:

   i) the dust-proof material has a fiber layer and an electret nonwoven fabric layer, and a total number of the fiber layer and the electret nonwoven fabric layer is 2 or more; and

   ii) in the dust-proof material, the fiber layer and the electret nonwoven fabric layer, which are adjacent to each other, are adhered at an adhesion area ratio of 5% or more and 10% or less; wherein

   the adhesion area ratio is measured according to the description using a rectangular sample of said dust-proof material, having a size of 240 mm on a long side and 180 mm on a short side; wherein the long side is divided into four equal parts, and the short side is divided into three equal parts, to thereby obtain twelve 60 mm square pieces of the rectangular sample; wherein

   a 20 mm square sample is cut out from each 60 mm square piece, wherein the 20 mm square sample has the same center point as the 60 mm square piece, and two sides of the 20 mm square sample are parallel to the long side and the remaining two sides of the 20 mm square sample are parallel to the short side;

   such that each of the twelve 20 mm square samples has the adhesion area ratio of 5% or more and 10% or less.

2. The protective clothing according to claim 1, wherein the electret nonwoven fabric layer of the dust-proof material is a meltblown nonwoven fabric or a spunbonded nonwoven fabric.

3. The protective clothing according to claim 1 or 2, wherein the dust-proof material has an air permeability of 30 $cm^3/cm^2/s$ or more.

4. The protective clothing according to any of claims 1 to 3, wherein the electret nonwoven fabric layer is made of a meltblown nonwoven fabric that contains the following amount of additives:

   iii) containing 0.5 to 5% by mass of a hindered amine additive or 0.5 to 5% by mass of a triazine additive; or

   iv) containing a total of 0.5 to 5% by mass of a hindered amine additive and a triazine additive, both being essential.

5. The protective clothing according to any of claims 1 to 4, wherein an adhesive to adhere the fiber layer and the electret nonwoven fabric layer of the dust-proof material is a hot-melt adhesive.

6. The protective clothing according to claim 5, wherein the amount or the hot-melt adhesive to adhere the fiber layer an the electret nonwoven fabric layer is 0.5 $g/m^2$ or more and 3.0 $g/m^2$ or less.

7. The protective clothing according to any of claims 1 to 6, having a thread sewing portion.

**Patentansprüche**

1. Staubdichte Bekleidung unter Verwendung des folgenden staubdichten Materials, wobei:

   i) das staubdichte Material eine Faserlage und eine Elektret-Vliesstofflage aufweist und die Gesamtanzahl an Faserlagen und Elektret-Vliesstofflagen 2 oder mehr beträgt; und

   ii) in dem staubdichten Material die Faserlage und die Elektret-Vliesstofflage, die aneinander anliegen, mit einem Klebeflächenanteil von 5 % oder mehr und 10 % oder weniger aneinander kleben; wobei

   der Klebeflächenanteil gemäß der Beschreibung unter Verwendung einer rechteckigen Probe des staubdichten Materials gemessen wird, deren lange Seite eine Länge von 240 mm und dessen kurze Seite eine Länge von 180 mm aufweist; wobei die lange Seite in vier gleiche Teile unterteilt wird und die kurze Seite in drei gleiche Teile unterteilt wird, um dadurch zwölf quadratische 60-mm-Teile aus der rechteckigen Probe zu erhalten; wobei

eine quadratische 20-mm-Probe aus jedem quadratischen 60-mm-Stück herausgeschnitten wird, wobei die quadratische 20-mm-Probe denselben Mittelpunkt wie das quadratische 60-mm-Stück aufweist und zwei Seiten der quadratischen 20-mm-Probe parallel zu der langen Seite sind und die restlichen zwei Seiten der quadratischen 20-mm-Probe parallel zu der kurzen Seite sind;

so dass jede der zwölf quadratischen 20-mm-Proben den Klebeflächenanteil von 5 % oder mehr und 10 % oder weniger aufweist.

2. Schutzbekleidung nach Anspruch 1, wobei die Elektret-Vliesstofflage des staubdichten Materials ein schmelzgeblasener Vliesstoff oder ein Spinnvliesstoff ist.

3. Schutzbekleidung nach Anspruch 1 oder 2, wobei das staubdichte Material eine Luftdurchlässigkeit von 30 cm$^3$/cm$^2$/s oder mehr aufweist.

4. Schutzbekleidung nach einem der Ansprüche 1 bis 3, wobei die Elektret-Vliesstofflage aus einem schmelzgeblasenen Vliesstoff besteht, der folgende Menge an Additiven enthält:

iii) 0,5 bis 5 Gew.-% eines sterisch gehinderten Amin-Additivs oder 0,5 bis 5 Gew.-% eines Triazin-Additivs; oder
iv) insgesamt 0,5 bis 5 Gew.-% eines sterisch gehinderten Amin-Additivs und eines Triazinadditivs, wobei beide essentiell sind.

5. Schutzbekleidung nach einem der Ansprüche 1 bis 4, wobei ein Klebemittel zum Verkleben der Faserlage mit der Elektret-Vliesstofflage des staubdichten Materials ein Heißschmelzkleber ist.

6. Schutzbekleidung nach Anspruch 5, wobei die Menge an Heißschmelzkleber zum Verkleben der Faserlage mit der Elektret-Vliesstofflage 0,5 g/m$^2$ oder mehr und 3,0 g/m$^2$ oder weniger beträgt.

7. Schutzbekleidung nach einem der Ansprüche 1 bis 6, die einen Fadenheftabschnitt aufweist.

## Revendications

1. Vêtement anti-poussière utilisant le matériau anti-poussière suivant, dans lequel :

i) le matériau anti-poussière comporte une couche de fibres et une couche de tissus non tissé électret, et un nombre total de la couche de fibres et de la couche de tissu non tissé électret est égal à 2 ou plus ; et
ii) dans le matériau anti-poussière, la couche de fibres et la couche de tissu non tissé électret, qui sont adjacentes l'une à l'autre, sont mis en adhérence à un taux de surface d'adhérence de 5 % ou plus et de 10 % ou moins ; dans lequel
le rapport de surface d'adhérence est mesuré selon la description en utilisant un échantillon rectangulaire dudit matériau anti-poussière, ayant une taille de 240 mm sur un côté long et de 180 mm sur un côté court ; dans lequel le côté long est divisé en quatre parties égales, et le côté court est divisé en trois parties égales, pour obtenir ainsi douze pièces carrées de 60 mm de l'échantillon rectangulaire ; où
un échantillon carré de 20 mm est découpé à partir de chaque pièce carrée de 60 mm, dans lequel l'échantillon carré de 20 mm a le même point central que la pièce carrée de 60 mm, et deux côtés de l'échantillon carré de 20 mm sont parallèles au côté long et les deux côtés restants de l'échantillon carré de 20 mm sont parallèles au côté court ;
de telle sorte que chacun des douze échantillons carrés de 20 mm ait le taux de surface d'adhérence de 5 % ou plus et de 10 % ou moins.

2. Vêtement de protection selon la revendication 1, dans lequel la couche de tissu non tissé électret du matériau anti-poussière est un tissu non tissé obtenu par extrusion-soufflage ou un tissu non tissé filé-lié.

3. Vêtement de protection selon la revendication 1 ou 2, dans lequel
le matériau anti-poussière a une perméabilité à l'air de 30 cm$^3$/cm$^2$/s ou plus.

4. Vêtement de protection selon l'une quelconque des revendications 1 à 3, dans lequel la couche de tissu non tissé électret est constituée d'un tissu non tissé obtenu par extrusion-soufflage qui contient la quantité suivante d'additifs :

iii) contenant 0,5 à 5 % en masse d'un additif d'aminé encombrée ou 0,5 à 5 % en masse d'un additif de triazine ; ou
iv) contenant au total 0,5 à 5 % en masse d'un additif d'amine encombrée et d'un additif triazine, les deux étant indispensables.

5. Vêtement de protection selon l'une quelconque des revendications 1 à 4, dans lequel un adhésif pour faire adhérer la couche de fibres et la couche de tissu non tissé électret du matériau anti-poussière est un adhésif thermofusible.

6. Vêtement de protection selon la revendication 5, dans lequel la quantité de l'adhésif thermofusible pour faire adhérer la couche de fibres et la couche de tissu non tissé électret est de 0,5 g/m$^2$ ou plus et de 3,0 g/m$^2$ ou moins.

7. Vêtement de protection selon l'une quelconque des revendications 1 à 6, comportant une partie de couture de fil.

【Fig. 1】

【Fig.2a】

【Fig.2b】

【Fig.2c】

【Fig. 3】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003073971 A
- JP 2008179932 A
- JP 2014101617 A

- JP 2007098356 A
- WO 2008066022 A1
- JP 2013154289 A